# EUROPEAN PATENT APPLICATION

(11) **EP 1 605 328 A1**
(43) Date of publication of application: **14.12.2005**
(21) Application number: 04013694.7
(22) Date of filing: 10.06.2004
(51) Int. Cl.: G05G 9/047, G06F 3/033

(54) **Control pin**

(71) Applicant: Sony Ericsson Mobile Communications AB, 221 88 Lund (SE)
(72) Inventor: Samuelsson, Torbjörn, 243 39 Höör (SE)
(74) Representative: Dahnér, Christer

(57) **Abstract**

The present invention relates to a pin (302) and a portable electronic device (312), wherein the pin can enable controlling of the portable electronic device, where the pin is intended for attaching to a navigation key (310) of the portable electronic device, where the pin has a first and a second end, further comprising a first electric contacting unit located at least near the first end of the pin, at least a first user input unit (304,306,308) electrically connected to said first electric contacting unit, for enabling electric contact between said first electric contacting unit and a second electric contacting unit located in the navigation key (310) when the pin (302) is attached to the navigation key, such that the portable electronic device can receive user inputs via at least said first user input unit.

## Description

The present invention relates to a pin for enabling improved controling of a portable electronic device.

### DESCRIPTION OF RELATED ART

Electronic games have recently increased in numbers, spread into a variety of portable electronic devices and increased in complexity. Such computer games can today be found as built-in applications in almost all types of portable electronic devices.

Not only have the games increased in complexity, but also the portable electronic devices have become more complex, today displaying a number of features and applications. As the portable electronic devices, such as mobile phones, have increased in complexity, they have also become smaller. However, at the same time the built-in screens or displays have grown in size.

The available space for user input units, such as key pads, various buttons, navigation keys, wheels, etc. has for this reason become smaller.

A consequence of the reduced space for these input units is that they have become small enough to be difficult to operate even with normal-sized fingers.

In connection with the increased complexity of the games more detailed and fine-tuned user inputs are needed to control the games.

Due to the small size of the user input units, it is difficult to detect detailed and fine-tuned user inputs by the user input units. This can result in inaccurate and coarse user inputs to be received by the mobile phones. A direct consequence can also be received unintended commands.

A few attempts to circumvent this problem in portable electronic devices in the state of the art are available.

One example is a user input game pad of Samsung which is attachable to one type of mobile phone and comprises a few buttons and one navigation key, which game pad preferably is to be used with two hands. This game pad has the disadvantage of being relatively large, the width of which being more than twice the one of the mobile phone.

A second example is another user input game pad of iPAQ which is attachable to a pocket PC, said game pad again comprising a few buttons and a navigation key. This game pad is smaller than the one of Samsung but still significantly wider than the pocket PC itself.

A third example is a mobile phone accessory of the type of a mechanical joystick console by Nokia, which can be attached a couple of mobile phones of Nokia, which uses four key pad buttons of the mobile phones for providing detecting of a joystick motion in any one of four possible directions, when being attached. This joystick console comprises embracing elements intended to embrace the mobile phone upon attaching it to the mobile phone, and therefore consumes a significant amount of space.

A fourth example is a mechanical command lever which is adaptable on an electronic gaming console, according to FR 2 720 009 A1. This mechanical command lever comprises a lever body that is connected to a first half-spherical inner element, and a second dome shaped element, covering the first half-spherical inner element upon attaching the dome shaped element to a gaming console. When attaching the command lever on top of a navigation key, the first half speherical inner element touches or resides close to the the navigation key. If a user moves the lever, the inner element to which the lever is attached, moves and affects the navigation key, over which the dome shaped element is positioned.

US 5,982,355 also describes a user input joystick that is provided on a touch screen of a remote control. Movement of the joystick, being mechanically attached to the touch screen, is detected by sensors of different types, including strain gauge and Hall effect sensors provided on the surface of the touch screen.

One disadvantage with the current technology is the size of user input consoles, joysticks, game pads, levers, or the like. This is valid not only when the accessories are mounted on the portable electronic devices, but also when they are deattached from the devices. An accessory of too large a size has to be carried around which will be experienced as inconvenient, and will most likely not be appreciated by the user.

Another disadvantage is that accessories usually are expensive and are therefore kept at a safe place, when not being used. This means that the they might not be at hand when the user wants to snap it onto the phone and use it.

A further possible disadvantage is that some attemps do not provide the user a sufficiently accurate and precise user input tool, which limits the possibilities to receive give fine-tuned commands by the device.

A third disadvantage is that the operation of a joystick-like lever requiring a few fingers, often restricts the movement of the entire hand, efficiently preventing other fingers to operate other potential user input units, such as buttons, wheels, slidable input units, etc. In practise this means that the entire hand is restricted to operating the joystick.

There is therefore still a need to provide a small-size accessory with which a user can operate a portable electronic device with sufficient accuracy and with which the user can operate more user inut units than moving a joystick like lever in different directions.

### SUMMARY OF THE INVENTION

The invention is thus directed towards providing a small accessory which a user can operate a portable electronic device with sufficient accuracy and with which the user can operate more user inut units than moving a joystick like lever in different directions.

This is achieved by enabling control of a portable electronic device via a pin that is electrically contacted to the portable electronic device, providing an accessible user input unit.

One object of the present invention is to provide a pin for enabling control of a portable electronic device via the pin that is electrically contacted to the portable electronic device, providing the accessible user input unit.

According to one aspect of this invention, this object is achieved by a pin intended for attaching to a navigation key of a portable electronic device, where the pin has a first and a second end, further comprising a first electric contacting unit located at least near the first end of the pin,at least a first user input unit electrically connected to said first electric contacting unit, for enabling electric contact between said first electric contacting unit and a second electric contacting unit located in the navigation key when the first end of the pin is attached to the navigation key, such that the portable electronic device can receive user inputs via at least said first user input unit.

A second aspect of the present invention is directed towards a pin including the features of the first aspect, wherein said first contacting unit comprises electrically conducting elements.

A third aspect of the present invention is directed towards a pin including the features of the first aspect, wherein the first user input unit is placed substantially at the second end of the pin.

A fourth aspect of the present invention is directed towards a pin including the features of the first aspect, further comprising a second user input unit placed on the perimeter of the pin.

Another object of the present invention is to provide a portable electronic device which can be controlled via the pin that is electrically contacted to the portable electronic device, providing the accessible user input unit.

According to a fifth aspect of this invention, this object is achieved by a portable electronic device having a navigation key, allowing attaching of a pin having a first electric contacting unit, to the navigation key, comprising a second contacting unit located in the navigation key, for enabling electric contact between the first electric contacting unit and said second electric contacting unit when a first end of the pin is attached to the navigation key, such that the portable electronic device can receive user inputs via at least a first user input unit.

A sixth aspect of the present invention is directed towards a portable electronic device including the features of the fifth aspect, wherein said second contacting unit comprises electrically conducting elements.

A seventh aspect of the present invention is directed towards a portable electronic device including the features of the fifth aspect, further comprising the pin according to any one of claims 1-4.

An eighth aspect of the present invention is directed towards a portable electronic device including the features of the fifth aspect, in which the electrically conducting elements of the first contacting unit are in electrical contact with the electrically conducting elements of the second contacting unit.

A ninth aspect of the present invention is directed towards a portable electronic device including the features of the fifth aspect, wherein the portable electronic device is a mobile phone.

### The present invention has the following advantages:

The pin provides a small accessory with which the portable electronic device can receive fine-tuned and detailed user inputs. This enables the user to discriminate between for instance eight different directions by using the pin as a joystick.

The pin provides user input units that are user accessible during operation of the pin.

The invention provides the advantage of providing an alternative user input unit to the user.

The pin does not consume significantly more space, as the pin may be used as an existing pen, provided in portable electronic device having touch screens. There is hardly any risk for it to be left behind.

### BRIEF DESCRIPTION OF THE DRAWINGS

The present invention will now be described in more detail in relation to the enclosed drawings, in which:
fig. 1 shows one type of portable electronic device;
fig. 2 is a side view of a pin attached to a portable electronic device according to one embodiment of the present invention;
fig. 3 is a side view of the pin attached to a portable electronic device according to one embodiment of the present invention under the influence of a user;
fig. 4 is a side view of a pin according to one embodiment of the present invention;
fig. 5 is the cross-sectional view AA, of the free pin from fig. 4;
fig. 6 is a side-view of a free pin according to one embodiment of the present invention;
fig. 7 is the cross-sectional view BB, of the free pin from fig. 6;
fig. 8 is a top view of a navigation key according to one embodiment of the present invention; and
fig. 9 is a projection view of the navigation key from fig. 8.

### DETAILED DESCRIPTION OF THE EMBODIMENTS

The present invention relates to providing a pin for enabling improved controlling of a portable electronic device.

Due to drawbacks and disadvantages of the state of the art, there is still a need to provide a small-size joystick pin with which a user can operate a portable electronic device with sufficient accuracy and with which the user can easily operate more user inut units at the same time as moving the joystick pin in one out of a plural directions.

The present invention is therefore directed to providing a joystick-like pin that is intended to be attached to a portable electronic device, such as a mobile phone. This pin is further intended to be attached onto a navigation key of said mobile phone. By attaching such a pin onto the navigation key, preferably attaching the pin vertically onto a substantially horisontal navigation key surface, the length of the pin thus essentially translates into the height of the combined joystick-navigation key. As the pin may be of the order of 5 centimeters long, the navigation key therefore may receive a height of about the same distance. By moving the pin attached to the navigation key sideways in any of four directions, detailed and fine-tuned commands will be easier to give by the user. This is because the movement that is needed to tilt the pin of the combined pin-navigation key a certain angle, equals the movement that is required to tilt the navigation key itself, multiplied by the ratio of the length of the attached pin and the radius of the navigation key. This provided that the pin is attached essentially in the center of the navigation key. A small movement of the pin thus results in an even smaller movement of the navigation key, enabling detailed and fine-tuned commands.

According to one embodiment of the present imvention, the pin further provides additional user input units, such as buttons or slidable input units, located on the perimeter of the pin. By providing such buttons on the joystick, the user may operate these buttons while moving the joystick by using the same hand. More commands can thus be given by using one hand only, which is appreciated since any second hand may be used for copletely different purposes or purposes such as, for instance, giving other commands by using other user input units that are not joystick related. In addition, a joystick having user input units operatable by using the joystick hand is appreciated and useful by certain disabled people, having decreased motor activity or possibly one operatable hand only.

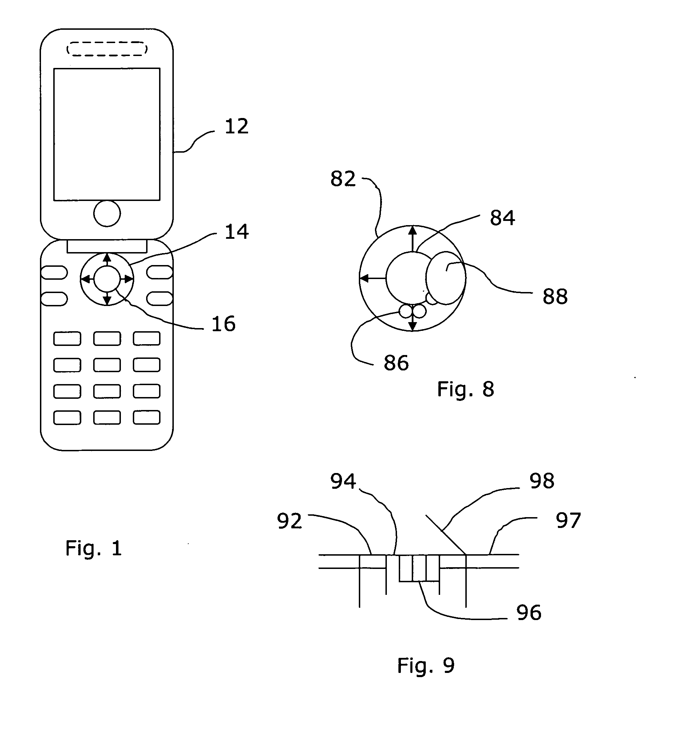

Starting with fig. 1 showing a front view of an open clam-shell type of portable electronic device of the type of a mobile phone, according to one preferred embodiment of the present invention, the invention will be explained in more detail. This figure is illustrative and the invention is by no means limited to clam-shell phones.

This mobile phone 12, is equipped with a navigation key, denoted by 14. A center area of the navigation key is further denoted by 16. This area 16, may be a button in itself in addition to the navigation key 14 that is typically operatable in four different directions.

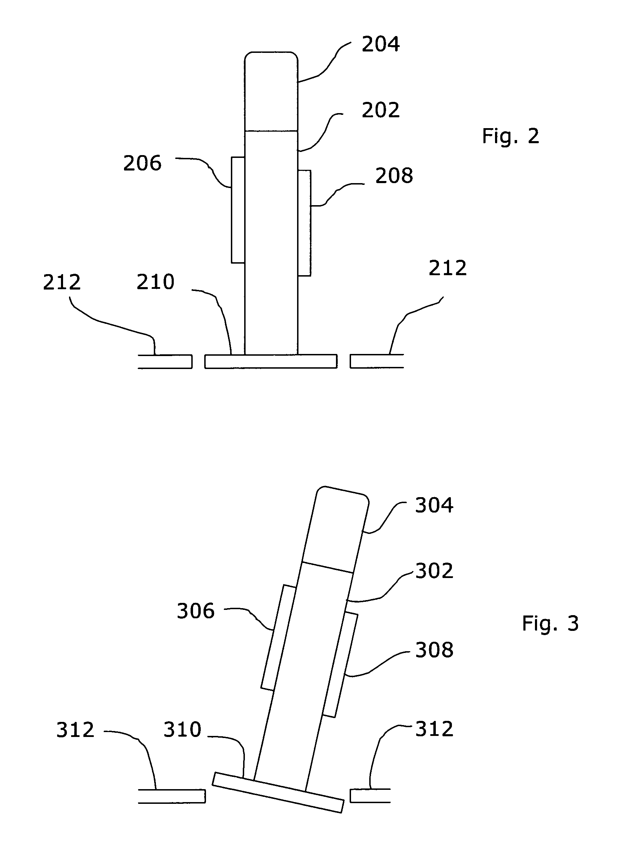

Fig. 2 schematically presents a pin attached to a portable electronic device, in a side-view, according to one embodiment of the present invention. The portable electronic device may be of the type of a mobile phone. The pin 202 is attached to a navigation key 210 of the mobile phone. The mobile phone cover surrounding the navigation key, 210 is denoted by 212. At one end of the pin 202, typically the upper end when the pin is attached to the mobile phone, is provide a button 204. Additional user input units, for instance of the type of buttons, are provided on the perimeter of the pin and are denoted by 206 and 208. These buttons or slidable input units are provided on the perimeter so that the user can easily operate them when holding the pin 202. In this figure, the user input units are located at opposite sides on the perimeter, but they may be located at different locations with respect to each other, according to other embodiments of the present invention.

The pin may be attached to the navigation key of the mobile phone by using snap-in attaching means, bayonet holding means, threaded means, or similar types. Many different types of means may be used to attach the pin to the mobile phone, for instance.

The pin presented in fig. 2 being attached to the navigation key, is not subjected to any motion by a user, and hence the pin 202 oriented perpendicular with respect to the surface of the cover 212 of the mobile phone.

Fig. 3 however displays a pin of the type as shown in fig. 2, but which is subjected to a force directed sideways by a user tilting the joystick-like pin. Here the pin 302 having a button 304 at one end and additional user input units of the type of buttons, or slidable input units 306 and 308, being attached to a navigation key 310, is tilted. As can be seen in the same figure the navigation key itself is subjected to a tilting motion, for the reason of being attached to the pin, as if the user were affecting the navigation key by tilting it in one direction. As is clearly seen the navigation key is tilted out of the plane as defined by the mobile phone cover, as denoted by 312.

From fig. 3 it can be seen that the top end 304 of the pin 302 is moved a larger distance from its center position than the circumference of the navigation key 310 as indicated by the distance gap between the navigation key 310 and the mobile phone cover 312. For a given tilt angle of the pin 302, the top 304 of th epin 302 has to be moved a larger distance than the perimeter of the navigation key 310.

Figs. 2 and 3 describe user input units of the type of buttons or slidable input units, which are examples of two types of input units that are possible. These input units may function in a way such that by for instance pressing a button or sliding a slidable input unit, located at the pin, an electrical circuit of the pin is closed or opened, which closed or opened position is detected by the mobile phone so that an application associated with this command, i.e. the closing or the opening, can be initiated.

The pin is therefore provided with at least one circuit that can conduct electrical current, according to one embodiment of the present invention. For this reason this at least one electric circuit may be made of an electrical conducting material, such as copper or another material that is a good electrical conductor.

The pin may also be used as a pen when not being mounted on the navigation key of the portable electronic device. This is useful in connection with a touch screen, where the pen typically has at least one rounded end, in order not to scratch or in other ways harm the touch screen when operating the portable electronic device by touching the screen with the rounded end of the pin.

The pin may further be inserted or snapped into a compartment of the portable electronic device, when not being used. This is well known and is used for pens in a number of portable electronic devices.

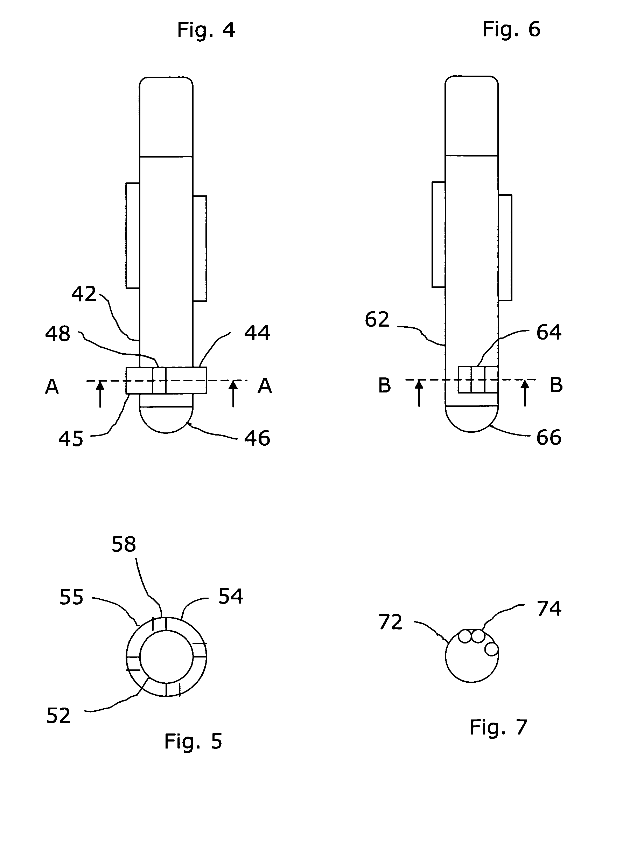

In order to enable detecting of any command, such as pressing a button or sliding a slidable input unit of the pin by for example the mobile phone, an electrical contacting unit is positioned at least near one end of the pin. Via this electrical contacting unit, the command can be forwarded from the pin to the mobile phone. Figs. 4 and 6 present two different types, of a variety of different types, of electrical contacting units located at least near one end of the pin.

With reference to figs. 4 and 5, one type of electrical contacting unit is explained. Fig. 5 displays the AA-cross-section of fig. 4. This type of electrical contacting unit comprises a ring-like part of electrically conducting and electrically insulating elements. As indicated in the figures, elements 44, 45, 52, 54 and 55, may all be electrically conducting elements, whereas the elements denoted by 48 and 58 may be electrically insulating elements. The electrically conducting elements are flanked by electrically insulating elements to avoid electrical shortcuts in the electrical contacting unit.

By referring to figs. 6 and 7, another type of electrical contacting unit is visualized. Here, the pin 62, 72, comprises three electrically conducting elements 64,74 positioned beside each other so that at least part of their electrically conducting surfaces are turned outwards and coalign with the perimeter of the pin. In this way their electrically conducting surfaces are available from the outer side of the pin. As is described below these surfaces are contacted by electrically conducting elements of a contacting unit located in the navigation key of the mobile phone.

Figs. 4-7, display three electrically conducting elements. According to yet another embodiment of the present invention two conducting elements are provided in the contacting unit.

According to yet another embodiment of the present invention four conductng elements are provided in the contacting unit.

Also, according to yet a different embodiment of the present invention two electrical contacting units are provided in the pin.

According to one embodiment of the present invention, the electrically contacting unit of the pin is intended to mate with electrically contacting unit of the navigation key. However, all electrically conducting elements or alternatively all electrically contacting units may not be contacted by the same number of electrically conducting elements or electrically contacting units, respectively. An electrically contacting unit of a navigation unit may for instance comprise three electrically conducting elements, but the pin which is attached onto the navigation key, may have only two electrically conducting elements. In this case the user may only use the pin to give a command that is related to the two conducting elements available and the electrical circuit of the pin, in addition to the user inputs as defined by tilting of the pin.

In order to transfer the user inputs from the pin via the electrical contacting unit to the mobile phone, the mobile phone comprises an electrical contacting unit that is provided to be able to mate with the contacting unit of the pin. In fig. 8, such an electrical contacting unit of the mobile phone is displayed. According to one embodiment of the present invention the contacting unit is provided in the center of navigation key 82 of the mobile phone. As is described in connection to fig. 1, the center 16 of the navigation key 14, may be a user input unit of the type of a button in itself.

According to one embodiment of the present invention this center or button is covered by a lid 88, as shown in fig. 8, which lid may be lifted by tilting it. By lifting the lid, a cavity 84 is revealed, in which a pin can be inserted upon attaching the pin to the mobile phone. Inside the cavity 84, there is provided three electrically conducting elements 86, that are intended to contact the electrically conducting elements of the electrically contacting unit of the pin when the pin is attached to the mobile phone, according to one embodiment of the present invention.

According to an alternative embodiment there is provided a different number of electrically conducting elements 86 in the cavity 84, for instance two, four or more.

In fig. 8 it is indicated four arrows, of which three only are visible. The number of these arrows shall not be used in any restrictive sense. Rather, as pointed out in the advantages of the present invention, the pin helps the user to discriminate for instance between eight different directions. In addition to the four directions, as indicated above, an additional four diagonal directions can easily be imagined. By using the pin as a joystick the user experiences a facilitated discrimination of the different directions when operating the joystick, as compared to operating the navigation key only, without the attached pin according to the present invention.

In an alternative embodiment of the present invention a different number of directions may be used.

According to one preferred embodiment of the present invention, a combination of user inputs, joystick being tilted in any one direction of four possible directions, together with for instance a pressed button on the pin, can be a accessed an arbitrary input or application command. As there may be more user inputs positioned on the pin, a number of different user input combinations are possible, which may in assessed other inputs or application commands, such as shortcuts, for example.

Fig. 9 is a projection view of the navigation key 92 of a mobile phone. The navigation key is denoted by 92 and the cavity in the key 92 is denoted by 94. In the inside wall defining the cavity 94, are provided electrically conducting elements 96, again intended to contact the corresponding electrically conducting elements of the pin when being inserted into the mobile phone. The cover of the mobile phone is denoted by 97 and the lid is denoted by 98.

According to yet another embodiment the lid 88, 98 of the cavity 84, 94 may be slided or pushed aside in order to open the cavity, but it may also be revealed in any other way, to enable the pin to be inserted into the cavity.

It is emphasized that this invention can be varied in may ways, of which the alternative embodiments below only are examples of a few. These different embodiments are hence nonlimiting examples. The scope of the present invention, however, is only limited by the subsequently following claims.

According to another embodiment of the present invention, the pin is provided with one button located at one end of the pin and another button on the perimeter of the pin.

According to yet another embodiment of the present invention, the pin is provided with one button located at one end of the pin only.

### The described present invention has thus the following advantages:

The pin provides a small accessory with which the portable electronic device can receive fine-tuned and detailed user inputs. This enables the user to discriminate between for instance eight different directions by using the pin as a joystick.

The pin provides user input units that are user accessible during operation of the pin.

The invention provides the advantage of providing an alternative user input unit to the user.

The pin does not consume significantly more space, as the pin may be used as an existing pen, provided in portable electronic device having touch screens.

There is hence no need for large and expensive additional accessories.

## Claims

1. A pin (42,62,202,302) intended for attaching to a navigation key (14,82,92,210,310) of a portable electronic device (12, 97, 212, 312), where the pin has a first and a second end, further comprising:
- a first electric contacting unit located at least near the first end of the pin,
- at least a first user input unit (204,206,208,304,306,308) electrically connected to said first electric contacting unit, for enabling electric contact between said first electric contacting unit and a second electric contacting unit located in the navigation key (14,82,92,210,310) when the first end of the pin (42,62,202,302) is attached to the navigation key, such that the portable electronic device can receive user inputs via at least said first user input unit.

2. The pin according to claim 1, wherein said first contacting unit comprises electrically conducting elements (44,45,52,54,55,64,74).

3. The pin according to claims 1 or 2, wherein the first user input unit (204,304) is placed substantially at the second end of the pin.

4. The pin according to any one of claims 1-3, said pin further comprising a second user input unit (206,208,306,308) placed on the perimeter of the pin.

5. A portable electronic device (12,97,212,312) having a navigation key (14,82,92,210,310) allowing attaching of a pin (202,302,42,62) having a first electric contacting unit, to the navigation key, comprising:
- a second contacting unit located in the navigation key, for enabling electric contact between the first electric contacting unit and said second electric contacting unit when a first end of the pin is attached to the navigation key, such that the portable electronic device can receive user inputs via at least a first user input unit (204,206,208,304,306,308).

6. The portable electronic device according to claim 5, wherein said second contacting unit comprises electrically conducting elements (86,96).

7. The portable electronic device according to claim 5 or 6, further comprising the pin (202,302,42,62) according to any one of claims 1-4.

8. The portable electronic device according to claim 7, in which the electrically conducting elements (44,45,52,54,55, 64,74) of the first contacting unit are in electrical contact with the electrically conducting elements (86,96) of the second contacting unit.

9. The portable electronic device according to any one of claims 5-8, wherein the portable electronic device (12, 97,212,312) is a mobile phone.
